(19) **Europäisches Patentamt**
**European Patent Office**
**Office européen des brevets**

(11) **EP 4 707 861 A1**

(12) # EUROPEAN PATENT APPLICATION

(43) Date of publication:
**11.03.2026 Bulletin 2026/11**

(21) Application number: **25200546.7**

(22) Date of filing: **05.09.2025**

(51) International Patent Classification (IPC):
**G01S 13/86** (2006.01)  **G01S 13/91** (2006.01)
**G01S 7/40** (2006.01)  G01S 13/02 (2006.01)

(52) Cooperative Patent Classification (CPC):
**G01S 13/91; G01S 7/4026; G01S 13/86;**
G01S 7/4091; G01S 2013/0245

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.09.2024 IL 31546424**

(71) Applicant: **Elta Systems Ltd.**
**7710201 Ashdod (IL)**

(72) Inventors:
• **SHALOM, Eldad**
**7086654 Gan-Yavne (IL)**
• **TAYOURI, Feri**
**7770095 Ashdod (IL)**
• **YANNAY, Netanel**
**7172397 Modi'in (IL)**
• **DAMRI, Amit**
**8764284 Ofakim (IL)**

(74) Representative: **Mewburn Ellis LLP**
**Aurora Building**
**Counterslip**
**Bristol BS1 6BX (GB)**

(54) **REDUCING OPERATIONAL COST OF AIR TRAFFIC CONTROL RADAR BY PARAMETER CALIBRATION AND/OR BIAS MEASUREMENT USING COMMERCIAL ADS-B SIGNA**

(57)    A method for reducing cost of airflight, the method comprising reducing cost of Air Traffic Control (ATC) and/or reducing maintenance cost of the Air Traffic Control (ATC)'s radar system. Reducing of maintenance cost may include reducing operational cost of estimation, based on data, of bias (e.g.) in the Air Traffic Control (ATC) radar system including at least once, basing the estimation of bias (e.g.) at least partly on data from commercial aircraft/s, to reduce or eliminate need for flying dedicated calibration aircraft to provide a source of data for the bias estimation and/or parameter Calibration.

# Fig. 1d

**Description**

FIELD OF THIS DISCLOSURE

The present invention relates to air traffic and more particularly to radar calibration in that context.

BACKGROUND FOR THIS DISCLOSURE

Air Traffic Control (ATC) is known.
Use of NFTR-based Phase and/or Amplitude calibration for radar (for Air Traffic Control (ATC) radar systems e.g.) is known. Calibration of antennae in the near field range (NFTR) is known, but costs of the near field range may reach up to tens of millions of dollars, and delays may be engendered.
Automatic Dependent Surveillance-Broadcast (ADS-B) data is known.
A 2008 publication by Carletti et al (U. Carletti, R. Cardinali and M. Cicolani, "Air traffic control using phased array radar technology," 2008 Tyrrhenian International Workshop on Digital Communications - Enhanced Surveillance of Aircraft and Vehicles, Capri, Italy, 2008, pp. 1-6, doi: 10.1109/TIWDC.2008.4649043) discussed introduction of phased array technology as the next step for development of the new generation of ATC radar systems.
The disclosures of all publications and patent documents mentioned in the specification, and of the publications and patent documents cited therein directly or indirectly, are hereby incorporated by reference, other than subject matter disclaimers or disavowals. If the incorporated material is inconsistent with the express disclosure herein, the interpretation is that the express disclosure herein describes certain embodiments, whereas the incorporated material describes other embodiments. Definition/s within the incorporated material may be regarded as one possible definition for the term/s in question.
Materiality of such publications and patent documents to patentability is not conceded.

SUMMARY OF CERTAIN EMBODIMENTS

Civilian aircraft avoid collisions e.g. by Air Traffic Control (ATC). Air traffic controllers manage aircraft movements within controlled airspace and on the ground. They provide instructions on altitude, route, and speed to keep planes safely separated. ATC uses radar to track aircraft positions in real-time and/or satellite-based surveillance e.g. ADS-B to track planes. ADS-B data typically originates from the aircraft's onboard avionics systems, which use GNSS for position information and/or various aircraft systems for other parameters. ADS-B data typically is broadcast and/or received by ground stations and/or satellites to support air traffic management and enhance safety and situational awareness.
Civilian pilots and ATC communicate frequently, e.g., constantly, to coordinate safe aircraft movements by exchanging information about aircraft positions and/or weather conditions and/or changes to flight plans.
Air Traffic Control (ATC) radar systems typically undergo periodic bias recalibration (as is the case for radar systems generally), say every few months. Special (e.g. dedicated) aircraft, aka calibration aircraft or radar calibration aircraft) are conventionally used in periodic recalibration and testing of radar systems. Such calibration aircraft are considered an essential part of maintaining the accuracy and reliability of radar systems, without which e.g. safe air traffic management cannot be maintained. These calibration aircraft help verify that radar systems are accurately detecting and tracking aircraft e.g. by flying specific known flight paths and patterns to provide data that can be compared against radar system readings.
Conventionally, routine Calibration Flights are scheduled to check and adjust radar systems as part of routine maintenance. Alternatively, or in addition, special Calibration Missions may be conducted when radar systems are changed e.g. upgraded. Calibration aircraft are equipped with high-precision instruments and sensors that measure altitude and/or speed, and/or position, which is costly. In Data Transmission, the aircraft transmits its high-precision position and/or other data to the radar system for comparison to the aircraft's position and movements as known by the radar. In the event of discrepancies, the radar may be assumed to be at fault, and the radar biases may then be recalibrated accordingly. Procedures include designing a flight plan to cover different altitudes, speeds, and directions to test plural aspects of radar performance. During flight, the calibration aircraft follows this plan, flying within radar coverage areas, and the calibration aircraft is tracked and monitored by both its own onboard systems and the radar systems being tested. The data collected by the calibration aircraft is analyzed, typically after the flight, to assess radar accuracy and performance. Any discrepancies may be used to recalibrate e.g. adjust radar system parameters. Calibration flights typically follow regulatory standards and/or safety protocols to ensure accuracy and safety of calibration. Also, coordination with Air Traffic Control is required to avoid disruption to normal air traffic operations during calibration flights.
Automatic Dependent Surveillance-Broadcast (ADS-B) data is conventionally generated by onboard avionics systems installed in (e.g.) commercial aircraft. An aircraft's ADS-B transponder, typically part of the aircraft's avionics suite, collects and broadcasts information about the aircraft's position and/or velocity and/or acceleration. ADS-B typically relies on data from GNSS (e.g. GPS) to determine the aircraft's position and/or altitude and/or speed. A GNSS receiver on the aircraft typically provides this positional data. An air Data Computer typically measures the aircraft's airspeed and/or altitude, and/or environmental parameters, and feeds this data to the ADS-B transponder. The ADS-B system typically ensures that the transmitted information is accurate and current e.g. by integrating data from various aircraft systems, e.g. navigation and/or flight control systems.

Typically, a commercial aircraft's ADS-B transponder continuously broadcasts the aircraft's data to ground stations and/or other aircraft equipped with ADS-B receivers, e.g. over a dedicated frequency (e.g. 1090 MHz for aircraft with Mode S transponders or 978 MHz for aircraft using Universal Access Transceiver (UAT) in the U.S.). Typically, the broadcast includes the aircraft's position and/or altitude and/or velocity and/or aircraft identification and/or intent data and/or aircraft type. Quality and/or accuracy of the measurements may also be transmitted.

Ground stations equipped with ADS-B receivers which are part of air traffic management infrastructure may receive such ADS-B data and may facilitate tracking and/or managing aircraft within these stations' respective coverage areas.

The received ADS-B data may be used by Air Traffic Control (ATC) systems to monitor aircraft positions and to ensure safe separation between flights. ATC systems may provide a comprehensive picture of air traffic e.g. by integrating ADS-B data with radar and other tracking systems. Alternatively, or in addition, ADS-B data may be used by other aircraft equipped with ADS-B receivers to enhance situational awareness which may avoid collisions, e.g. in environments with limited traditional radar coverage.

Certain embodiments of the present invention seek to provide circuitry typically comprising at least one processor in communication with at least one memory, with instructions stored in such memory executed by the processor to provide functionalities which are described herein in detail. Any functionality described herein may be firmware-implemented or processor-implemented, as appropriate.

There is thus provided, in accordance with at least one embodiment of the present invention,
The present invention typically includes at least the following embodiments:

Embodiment 1. A method for reducing cost of airflight, the method comprising: reducing cost of Air Traffic Control (ATC) e.g. by reducing maintenance cost of the Air Traffic Control (ATC)'s radar system, the reducing of the maintenance cost typically including: reducing operational cost of estimation, based on data, of bias in the Air Traffic Control (ATC) radar system, typically including at least once, basing the estimation of bias at least partly on data from at least one commercial aircraft, e.g. to reduce or eliminate need for flying dedicated calibration aircraft and/or to provide a source of data for the estimation of bias; thus the method typically reduces operational cost of Radar/ATC and/or reduces the eventual cost of airflight e.g. to the public.

Embodiment 2. The method according to any of the preceding embodiments and also comprising, at least once, comparing an estimation E of bias of the at least one Air Traffic Control (ATC) radar system to a standard, wherein the estimation E is based at least partly on the data from at least one commercial aircraft.

Embodiment 3. The method according to any of the preceding embodiments and also comprising, at least once, recalibrating the at least one Air Traffic Control (ATC) radar system based at least partly on the data from at least one commercial aircraft.

Embodiment 4. The method according to any of the preceding embodiments wherein the commercial aircraft is flying a route which is determined externally, or a route which is determined without regard to calibration requirements of the Air Traffic Control (ATC)'s radar system, or a commercial route, rather than flying a route customized to facilitate calibration of the Air Traffic Control (ATC)'s radar system, as is conventional when flying dedicated calibration aircraft.

Embodiment 5. The method according to any of the preceding embodiments wherein the at least one commercial aircraft comprises plural commercial aircraft passing within the Air Traffic Control (ATC)'s radar system's range.

Embodiment 6. The method according to any of the preceding embodiments wherein the at least one commercial aircraft comprises a subset of, rather than a set of all, commercial aircraft passing within the Air Traffic Control (ATC)'s radar system's range during a bias estimation data gathering session, and wherein the method comprises generating the subset by selecting only some "best" aircraft from among the set of all commercial aircraft (e.g. selecting some aircraft which are better than others) passing within the Air Traffic Control (ATC)'s radar system's range during the bias estimation data gathering session.

Embodiment 7. The method according to any of the preceding embodiments wherein the recalibrating is performed repeatedly e.g. periodically, thereby to ensure quality of the Air Traffic Control (ATC) by repeatedly, e.g. periodically, estimating bias based at least partly on the data from the at least one commercial aircraft, and, each time the bias is unacceptably high, recalibrating the at least one Air Traffic Control (ATC) radar system.

Embodiment 8. The method according to any of the preceding embodiments wherein the estimation E is, at least for a certain time period (e.g. after an initial learning period) based entirely on the data from at least one commercial aircraft, and wherein the Air Traffic Control (ATC) is recalibrated based on the estimation E, and thus, based entirely on the data from at least one commercial aircraft, thereby to eliminate the need for flying dedicated calibration aircraft during the time period.

Embodiment 9. The method according to any of the preceding embodiments wherein the data, on which the estimation of bias is based, comprises location and/or direction, and/or velocity of the at least one commercial aircraft.

Embodiment 10. The method according to any of the preceding embodiments wherein during a training data-gathering phase, dedicated calibration aircraft is flown to provide a source of first data for the estimation of bias, and, also, second data is gathered from the at least one commercial aircraft, and wherein, accordingly, an Artificial Intelligence-based hardware processor learns how to predict bias in the Air Traffic Control (ATC) radar system based on the data gathered from the at least one commercial aircraft, using training data which pairs the first data and the second data.

Embodiment 11. The method according to any of the preceding embodiments wherein the first data and the second data both comprise location and/or direction, and/or velocity data of the dedicated calibration aircraft and the at least one commercial aircraft respectively.

Embodiment 12. The method according to any of the preceding embodiments wherein the training data comprises location and/or direction, and/or velocity data of the dedicated calibration aircraft at time t, paired with location and/or direction, and/or velocity data of the at least one commercial aircraft at the time t.

Embodiment 13. An antenna calibration system e.g. for Air Traffic Control radar antennae, the system comprising:a search functionality for finding a correct phase and/or amplitude and/or AI-based functionality for calibrating phase and/or amplitude; and/or a hardware processor which typically receives data via a (commercial) ADS-B system serving (typically commercial or civilian) aircraft which may be passing through the radar's range and which are typicallly equipped with an ADS-B transponder (typically, GPS is used to enable the commercial aircraft to determine and broadcast its self-position) wherein the hardware processor is typically configured to select at least one best target, e.g. from among the aircraft, for training the system's functionalities.

Embodiment 14. The system according to any of the preceding embodiments wherein the antenna comprises a phased array antenna.

Embodiment 15. The system according to any of the preceding embodiments wherein the antenna comprises a MIMO (multiple input, multiple output) antenna.

Embodiment 16. The system according to any of the preceding embodiments and also comprising (typically ground-based) ADS-B receivers, which use antennae to collect data from any (typically commercial) aircraft in their local area (aka area of coverage) which is equipped with an ADS-B transponder.

Embodiment 17. The system according to any of the preceding embodiments and also comprising flight tracking functionality which accepts information from ADS-B receivers and, accordingly, tracks a/c which are moving from one ADS-B receiver's area of coverage, to another ADS-B receiver's area of coverage.

Embodiment 18. The system according to any of the preceding embodiments and also comprising ADS-B receivers which collect data from aircraft outside of the flight-tracking functionality's ADS-B network coverage area.

Embodiment 19. A computer program product, comprising a non-transitory tangible computer readable medium having computer readable program code embodied therein, the computer readable program code adapted to be executed to implement a method for, say, reducing cost of airflight, the method comprising: reducing cost, say of Air Traffic Control (ATC) e.g. by reducing maintenance cost of the Air Traffic Control (ATC)'s radar system, the reducing of the maintenance cost typically including: reducing operational cost of estimation, e.g. based on data, of bias in the Air Traffic Control (ATC) radar system including at least once, basing the estimation of bias at least partly on data from at least one commercial aircraft, to reduce or eliminate need for flying dedicated calibration aircraft to provide a source of data for the estimation of bias.

Also provided, excluding signals, is a computer program comprising computer program code means for performing any of the methods shown and described herein when the program is run on at least one computer; and a computer program product, comprising a typically non-transitory computer-usable or -readable medium e.g. non-transitory computer -usable or -readable storage medium, typically tangible, having a computer readable program code embodied therein, the computer readable program code adapted to be executed to implement any or all of the methods shown and described herein. The operations in accordance with the teachings herein may be performed by at least one computer specially constructed for the desired purposes. or a general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein; the above processor/s, display and input means including computer programs, in accordance with all or any subset of the embodiments of the present invention. Any or all functionalities of the invention shown and described herein, such as but not limited to operations within flowcharts, may be performed by any one or more of at least one conventional personal computer processor, workstation or other programmable device or computer or electronic computing device or processor, either general-purpose or specifically constructed, used for processing; a computer display screen and/or printer and/or speaker for displaying; machine-readable memory such as flash drives, optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules illustrated and described herein may include any one or combination or plurality of a server, a data processor, a memory/computer storage, a communication interface (wireless (e.g. BLE) or wired (e.g. USB)), and a computer program stored in memory/computer storage.

The term "process" as used above is intended to include any type of computation or manipulation or transformation of data represented as physical, e.g. electronic, phenomena which may occur or reside e.g. within registers and /or memories of at least one computer or processor. Use of nouns in singular form is not intended to be limiting; thus, the term processor is intended to include a plurality of processing units which may be distributed or remote, the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements all or any subset of the apparatus, methods, features, and functionalities of the invention shown and described herein. Alternatively, or in addition, the apparatus of the present invention may include, according to certain embodiments of the invention, a program as above which may be written in any conventional programming language, and optionally a machine for executing the program, such as but not limited to a general-purpose computer which may optionally be configured or activated in accordance with the teachings of the present invention. Any of the teachings incorporated herein may, wherever suitable, operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the actions and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers, or other such information storage, transmission or display devices, or may be provided to external factors, e.g. via a suitable data network. The term "computer" should be broadly construed to cover any kind of electronic device with data processing capabilities, including, by way of nonlimiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller, or processor is intended to include one or more hardware devices e.g. chips, which may be co-located or remote from one another. Any controller or processor may, for example, comprise at least one CPU, DSP, FPGA or ASIC, suitably configured in accordance with the logic and functionalities described herein.

Any feature or logic or functionality described herein may be implemented by processor/s or controller/s configured as per the described feature or logic or functionality, even if the processor/s or controller/s are not specifically illustrated for simplicity. The controller or processor may be implemented in hardware, e.g., using one or more Application-Specific Integrated Circuits (ASICs) or Field-Programmable Gate Arrays (FPGAs), or may comprise a microprocessor that runs suitable software, or a combination of hardware and software elements.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components, and alternatively may be the same structure. A statement that an element or feature may exist is intended to include (a) embodiments in which the element or feature exists; (b) embodiments in which the element or feature does not exist; and (c) embodiments in which the element or feature exist selectably, e.g. a user may configure or select whether the element or feature does or does not exist.

Any suitable input device, such as but not limited to a sensor, may be used to generate or otherwise provide information received by the apparatus and methods shown and described herein. Any suitable output, device, or display may be used to display or output information generated by the apparatus and methods shown and described herein. Any suitable processor/s may be employed to compute or generate or route, or otherwise manipulate or process information as described herein and/or to perform functionalities described herein and/or to implement any engine, interface, or other system illustrated or described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

The system shown and described herein may include a user interface which may, for example, include all or any subset of: an interactive voice response interface, automated response tool, speech-to-text transcription system, automated digital or electronic interface having interactive visual components, web portal, visual interface loaded as web page/s or screen/s from server/s via communication network/s to a web browser or other application downloaded onto a user's device, automated speech-to-text conversion tool, including a front-end interface portion thereof and back-end logic interacting therewith. Thus, the term user interface or "UI" as used herein includes also the underlying logic which controls the data presented to the user e.g. by the system display and receives and processes data entered by a user e.g. using her or his workstation/device.

BRIEF DESCRIPTION OF THE DRAWINGS

Figs. 1a - 1d are simplified block diagrams depicting embodiments of the invention.

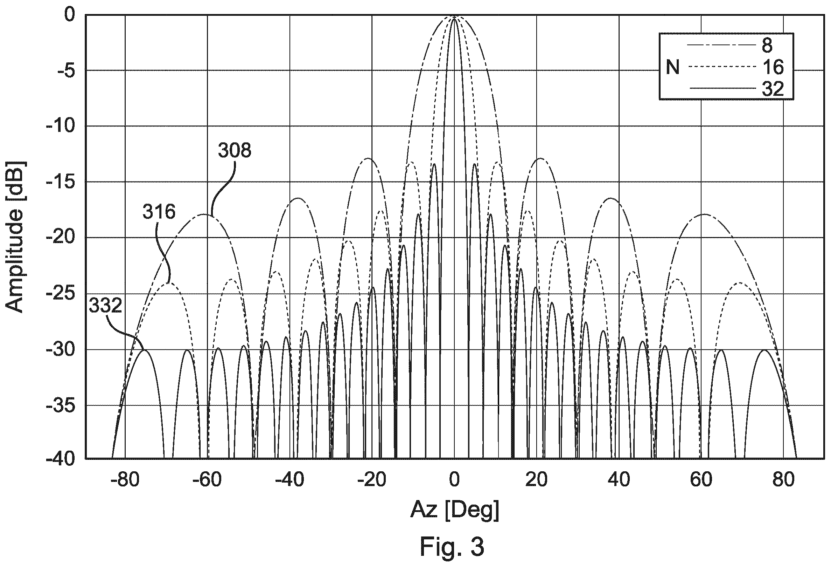

Figs. 2 - 5, 6b (prior art) are graphs which are useful in understanding certain embodiments.
Fig. 6a is a simplified semi-pictorial diagram (prior art) which is useful in understanding certain embodiments.
Figs. 7 - 8 are simplified block diagrams depicting embodiments of the invention.

It is appreciated that elements illustrated in more than one drawing, and/or elements in the written description, or even entire embodiments, may still be combined into a single embodiment, except if otherwise specifically clarified herewithin.

Methods and systems included in the scope of the present invention may include some (e.g. any suitable subset) or all of the functional blocks shown in the specifically illustrated implementations by way of example, in any suitable order e.g. as shown.

Computational, functional or logical components described and illustrated herein can be implemented in various forms, for example, as hardware circuits, such as but not limited to custom VLSI circuits or gate arrays, or programmable hardware devices, such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences, such as but not limited to objects, procedures, functions, routines, and programs, and may originate from several computer files which typically operate synergistically.

Each functionality or method herein may be implemented in software (e.g. for execution on suitable processing hardware such as a microprocessor or digital signal processor), firmware, hardware (using any conventional hardware technology such as Integrated Circuit technology) or any combination thereof.

Functionality or operations stipulated as being software-implemented may alternatively be wholly or fully implemented by an equivalent hardware or firmware module, and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware, in which case all or any subset of the variables, parameters, and computations described herein may be in hardware.

Any module or functionality described herein may comprise a suitably configured hardware component or circuitry. Alternatively, or in addition, modules or functionality described herein may be performed by a general-purpose computer, or more generally by a suitable microprocessor, configured in accordance with methods shown and described herein, or any suitable subset, in any suitable order, of the operations included in such methods, or in accordance with methods known in the art.

Any logical functionality described herein may be implemented as a real time application, if and as appropriate, and which may employ any suitable architectural option, such as but not limited to FPGA, ASIC, or DSP, or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing all or any subset of the method's operations, including a mobile application, platform, or operating system e.g. as stored in a medium, as well as combining the computer program with a hardware device to perform all or any subset of the operations of the method.

Data can be stored on one or more tangible or intangible computer readable media stored at one or more different locations, different network nodes, or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or offline; which is of any type or level or amount or category of volatility, differentiation, mutability, accessibility, addressability, capacity, performance and energy use; and which is based on any suitable technologies such as semiconductor, magnetic, optical, paper, and others.

DETAILED DESCRIPTION OF CERTAIN EMBODIMENTS

Certain embodiments seek to more efficiently ensure safety of commercial air traffic by more efficiently enhancing Air Traffic Control Radar performance including both simple low-cost radars as well as phased-array ATC radar. Certain embodiments seek to more efficiently enhance radar performance by providing improved bias correction for radar including both simple low-cost radars as well as phased-array radar, and/or to provide improved Phase and/or Amplitude calibration (aka "parameters calibration") for phased-array radar; typically the Phase and/or Amplitude calibration achieved is an improvement vis a vis conventional NFTR-based Phase and/or Amplitude calibration; note that NFTR is often a bottleneck in radar supply chains. Typically, the bias correction achieved is an improvement e.g. vis a vis conventional bias correction which relies on specialized calibration flights to ensure safety of commercial air traffic.

Certain embodiments seek to provide improved bias estimation and/or correction and/or to provide improved Phase and/or Amplitude calibration (aka "parameters calibration"), for radar. It is appreciated that this is extremely useful at least for ensuring safety of commercial air traffic by more efficiently enhancing Air Traffic Control Radar performance.

Certain embodiments seek to provide a method for reducing the operational cost of bias measurement in radar systems based on data, wherein the data's source includes location and/or direction, and/or velocity of at least one conventional e.g. commercial aircraft, to reduce or eliminate the need for using dedicated calibration aircraft to provide the data.

Certain embodiments seek to provide autonomous calibration of phased array radar in the field.

According to embodiments of the present invention, instead of providing calibration aircraft equipped with high-precision instruments and sensors that yield high-precision altitude and/or speed, and/or position, which then serve as a high-precision source of data used for ongoing recalibration and/or testing of Air Traffic Control (ATC) radar systems, costs are reduced by obviating the special calibration aircraft, and, instead, using conventional e.g. commercial aircraft as a source of data used for ongoing recalibration and/or testing of Air Traffic Control (ATC) radar systems. For example, Artificial Intelligence (AI) may be used to train a software system to input self-data (e.g. position and/or velocity and/or acceleration and/or direction) from plural commercial aircraft respectively, and to learn to emulate output of calibration aircraft, even if the commercial aircraft's self-data is less accurate than the calibration aircraft's self-data and/or even if the calibration aircraft's path is specially designed for its task, whereas the plural commercial aircrafts' flight paths are not specifically designed for this task and are instead determined by outside factors e.g. by commercial routes required for tourist and business travel. This may be done by generating a training set where each member or element of the training set pairs plural commercial aircrafts' self-data with calibration aircraft's self-data.

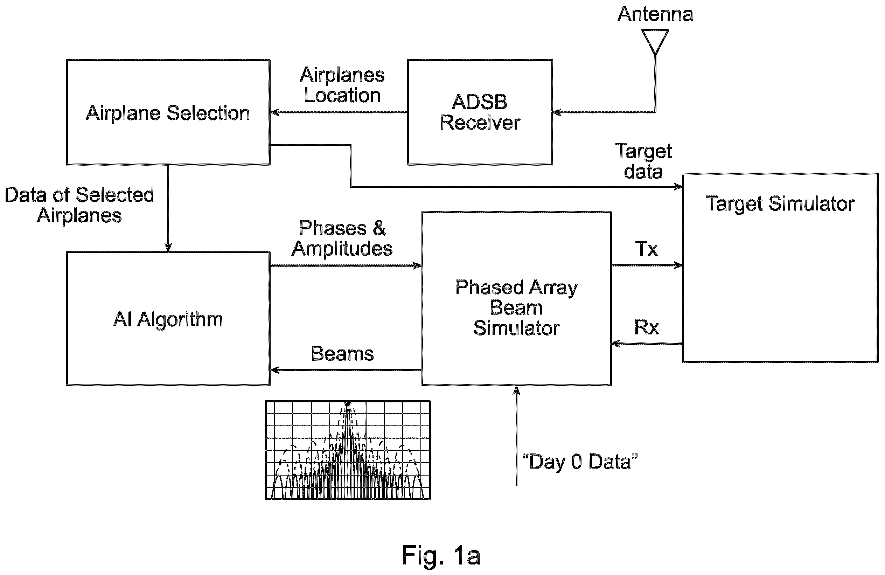

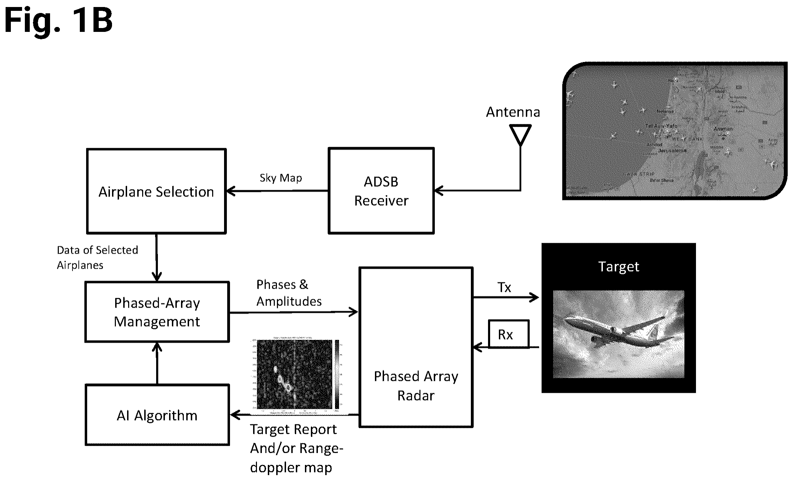

Reference is now made to Fig. 1a which is a simplified block diagram illustration of a system in accordance with certain embodiments. The operation of the system of Fig. 1a (or, mutatis mutandis, Figs. 1b - 1d) generally includes using an ADSB receiver for receiving, in Real-time, ADS-B signals (Jetvision, RadarCapeas an example of an ADS-B Receiver ) or tracking information of airplanes which happen to enter the range of a radar to be recalibrated; and/or selection by Airplane Selection Module of best airplanes for calibration and/or use of software, e.g. AI functionality, to compare beams received from the radar and the known location of the airplanes and, accordingly, computation of a new set of phases and/or amplitudes for the radar, thereby to recalibrate. There may be separate functionality for Digital Radars, and for Analog Radars. The present invention includes any hardware processor or computer program product configured to carry out any method or operation shown and described herein.

ADSB receiver characteristics may include:

Supporting 1090ES signal (1090Mhz).

Mode-S and/or Mode A/C data decoding.
Receive aircraft signal from up to 450Km.
Precise time-stamp from GNSS, for minimal latency.

The Airplane Selection Module, tasked with selecting "best airplane/s" for calibration, may have two operational phases:

1. During Calibration, Low gain - select aircraft which are large and close enough if it is more important at this stage to converge to an affordable beam (high convergence rate) than to achieve accuracy; and/or
2. During Radar operation: Distanced and small aircraft with high accuracy score since accuracy may now be of greater importance. Beam pointing error may be corrected. Low convergence rate is typically tolerable, in which case only "top quality" airplanes may be used for parameter update.

The Airplane selection block of Fig. 1a (or Figs. 1b - 1d) typically but not necessarily uses AI.

The Phased Array management block is typically tasked with converting geographic coordination of airplane into radar's coordination. Typically, this block:

-    Receives geographic coordination of the airplane.
-    Receives phase/amplitude parameters from the AI module.
-    According to radar's capability, generate required constellation and/or
-    computes composed phases/amplitudes for the radar.

AI is typically but not necessarily used for computing calibration parameters for the radar. There may be separate functionality/ operational Modes for Digital Radar vs Analog Radar. The computation may be performed iteratively till the radar beam converges into an optimal state. Typically, the AI block receives beams from the radar to be calibrated and/or analyses detection in each beam and/or computes a new phase/amplitude parameter set accordingly. Beam information may be in the form of range-doppler maps of the beams.

Any suitable training data may be used to train the AI block in Fig. 1a (or Figs. 1b - 1d). For example, the training data may include: dependent variable/s - calibration data provided to a certain ATC-radar by calibration aircraft; paired with independent variable/s - data sent by some/all commercial aircraft that were within range of that ATC-radar.

The various blocks of Fig. 1a (or Figs. 1b - 1d) may typically all (other than the ADSB receiver and the radar itself which includes both hardware and software) be implemented in software, thus advantages as described herein may be achieved without necessarily adding any radar hardware (note that, conventionally, phased array radars incorporate expensive hardware to perform calibration). Typically, all blocks, other than the ADSB receiver, are embedded in the radar software. Alternatively, there may be a system external to the radar which typically includes a predefined interface to the radar. the ADSB receiver (including antenna) may be separate from e.g. adjacent to the system/radar. Typically, the ADSB receiver and its antenna are on the ground; these may comprise off-the-shelf hardware. The system of Fig. 1a (or Figs. 1b - 1d) may provide calibration of the radar's antenna by comparison to ADSB data.

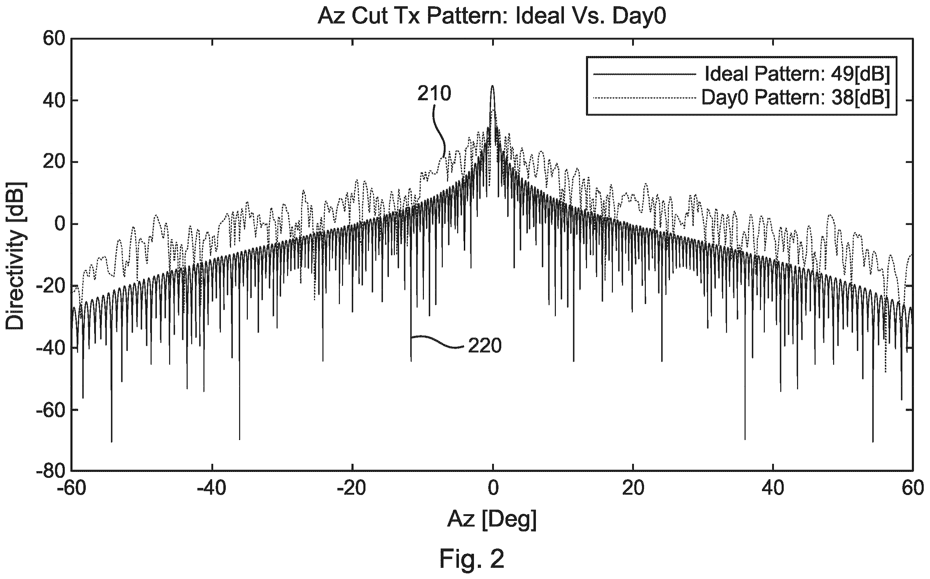

The Phased-array Beam Simulator and target simulator are both mere simulations which may replace actual Radar during development. In an actual operating system, both simulators are typically replaced by an actual radar to be calibrated. The radar may receive phases and amplitudes from the AI, may provide beams to the AI block or any alternative known in the art. Ostensibly, at "day0", there are no beams. It turns out, based on investigation of several radar systems on "Day0" that in fact there is enough SNR to observe detection at a distance of 10nth kilometers away, or more, e.g. as shown in the graph of Fig. 2 which shows directivity (in dB) as a function of an Az cut Tx pattern where day0 pattern 210 is shown superimposed on the ideal pattern 220.

Referring again to Fig. 1a (or Figs. 1b - 1d), typically the AI block receives, for each beam in the radar, a range-Doppler map of each received beam e.g. as represented by the beams arrow of Fig. 1a (or Figs. 1b - 1d).

Alternatively, or in addition, the AI block may receive a detection message from the radar e.g. a list of targets and optionally target parameters for each target on the list e.g. range and/or velocity and/or SNR, in addition to (or instead of) a range-Doppler map.

All or any subset of the illustrated blocks may be provided, suitably interconnected e.g. as shown. For example, the illustrated blocks may communicate between themselves, as follows:

a/c selector to AI: Internal Software.
AI to beam simulator: >> AI block to Radar: Internal software or Ethernet (or any other communication IF).
Phase/amplitude value for each element in phased-array Radar.
Beam simulator to target simulator: Radar to target. Normal operation of Radar to transmit beam and receive reflections from targets in few beams.

a/c selector to target simulator: may be part of development simulation, and may be omitted in practice.

Target simulator to beam simulator: Radar to target. Normal operation of radar to transmit beam and receive reflections from targets in plural beams.

It is appreciated that the "target" typically comprises a commercial airplane detected by the radar being calibrated; the radar is then able to supply the target's distance and/or velocity and/or acceleration and/or direction. A target may be considered useful or "good" if the radar being calibrated detects it and the target can be correlated with a target received by a ADSB signal. beam simulator to AI: Radar to AI block: Internal software or Ethernet (or other commercial interface aka IF .

antenna to ADSB receive: may be part of ADSB receiver kit (off-the shelf product).

ADSB receiver to a/c (aircraft) selector: Ethernet e.g.

day0 data to beam simulator: Internal parameters of radar before calibration. Part of radar. "Day0" typically represents the state in which the radar is delivered from the factory to the customer before any phase/amplitude calibration. While, conventionally, radar is delivered after full calibration in NFTR, embodiments herein enable this process to be obviated or eliminated.

Typically, in day0 there is actually no beam in the antenna. The antenna gain may be very low and the beam pointing error may be random. Nevertheless, there is some energy extracted from radar to random directions. Typically, when transmitting and receiving in Day0, only large aircraft and/or aircraft close to the radar are detected. SNR (signal to noise ratio) will be low relative to calibrated radar. The direction in which these aircraft are detected using the radar is typically random. Nonetheless, the system does detect something, and using ADSB reception it is known where the airplane is located initially with less than excellent accuracy, albeit typically better than or more accurate than at a direction in which the radar detects the target. Typically, it is enough to improve the phase/amplitude of the radar. By performing this process iteratively (on this airplane and/or on others) calibration parameters are improved and the beam is improved. This improvement in turn results in better SNR and an ability to track more distant and/or smaller airplanes, which in turn further improves the calibration. This yields an iterative process of phase/amplitude calibration. The biases measurement may occur in a different state or stage e.g. when the radar is already fully phase/amplitude calibrated, typically based on any suitable quality stopping-criterion which determines that the phase/amplitude calibration is of a high enough quality to be considered complete.

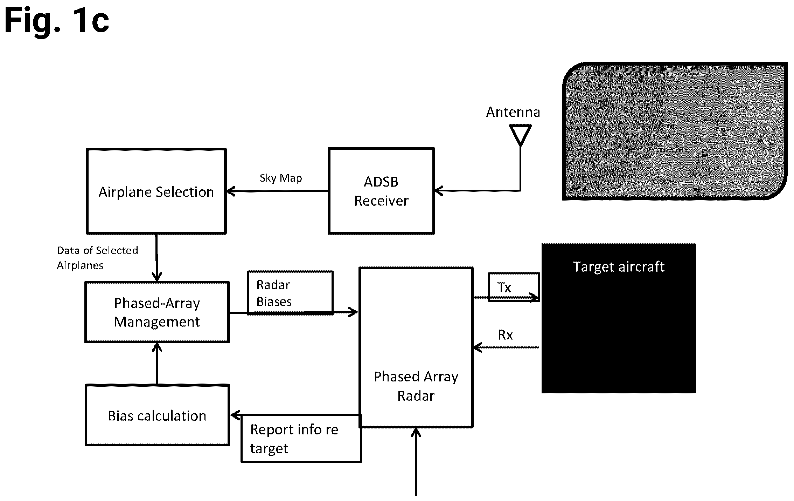

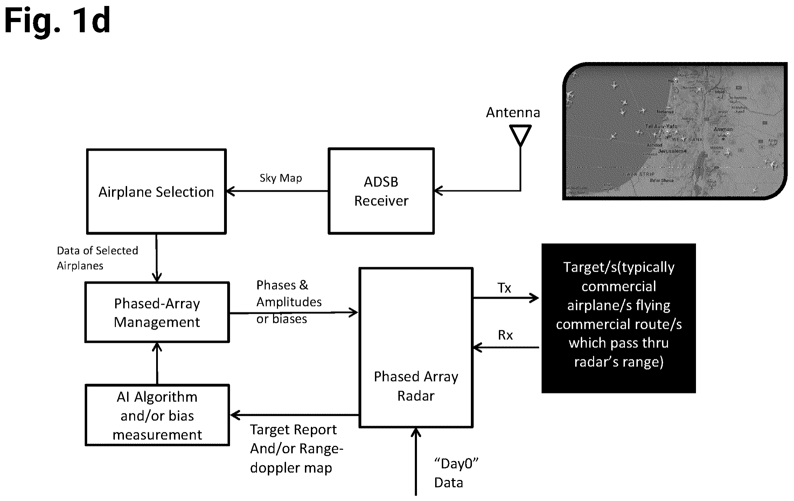

It is appreciated that, typically, the system of Fig. 1c (or Fig. 1d) is configured to generate biases calibration data for the radar, by combining results from plural commercial aircraft which may be flying their normal commercial flights (rather than, say, a single dedicated calibration aircraft filing a specially pre-designed route). The aircraft from which to combine results may be selected from among the set of aircraft within range of the ATC-radar to be calibrated In the "a/c selection" block of Fig. 1c (or Fig. 1d). For measurement of biases measurement, which typically takes place when the phase and/or amplitude of radar are already calibrated, statistic measurements from plural airplanes, typically commercial aircraft which may be flying their normal commercial flights, may be combined. This leverages the fact that over most of the globe (Europe, most of the U.S.A., most of the Middle East) there are hundreds of commercial planes every day, and enables usage of dedicated calibration aircraft, filing specially pre-designed routes, to be reduced or eliminated. This reduces costs of airflight, by reducing cost of Air Traffic Control (ATC) by reducing maintenance cost of the Air Traffic Control (ATC)'s radar system, because the reliance on ordinary commercial aircraft, which may be flying their normal commercial flights (rather than, say, a single dedicated calibration aircraft flying on a specially pre-designed route) reduces operational costs of estimation, based on data, of bias in the radar system. This may also reduce costs of other radar-driven endeavors, such as many other common radar use-cases in every-day life, e.g. as listed in detail hereinbelow.

It is appreciated that the specific time interval in which calibration is completed is typically not critical; note that, in conventional systems, biases calibration occurs only every few months and parameter calibration normally occurs only once (in NFTR e.g.) , whereas the system herein can complete calibration in days, or even hours, or minutes or less, depending on density and quality of flights in the area of the radar to be calibrated. Thus, for example, recalibrations may be scheduled at times in which many aircraft are known to be available, and not on days or seasons known to be "slow".

Alternatively, or in addition, if radar is deployed in a very "sparse" area with little air traffic, the radar may temporarily be deployed in a higher-air-traffic density area, to enable calibration to occur, and then be moved to its final destination. In this very rare situation, the radar may not correct degradation in calibration because of aging, and bias measurement may not be possible, in which case occasional calibration flights may be scheduled for this rare situation, but not for the remainder of the globe, given that in the majority of which, commercial flights abound. Even in this rare situation however, performance and operational cost will be equivalent or comparable to today's radars.

According to certain embodiments, the system detects or selects a "good" plane, and this triggers a process of improving calibration and/or bias measurement, of the system radar. Aircraft may be considered or selected to be "good" or "best" to the extent they are ranked high by the Airplane Selection block of Fig. 1a (or Figs. 1b - 1d). ADSB information may be analyzed to determine which aircraft are "better" than others e.g. all or any subset of distance, direction, velocity, size, and accuracy. Good/bad ranking of aircraft may depend on the above ADSB parameters and/or on the calibration state of the radar which typically changes over time due to the calibration process described herein. For example, a calibration quality parameter may be computed between calibration iterations and may also serve as a stopping criterion (e.g. by comparison to a calibration quality threshold, which, if exceeded, stops the calibration process.

Typically, at the end of a calibration process, the radar detection is much more accurate than information from the ADSB. Hence the criterion for convergence or stopping criterion may be maximum gain of radar (maximum normalized SNR), rather than correctness compared to ADSB information.

It is appreciated that SNR detection in radar typically "sparks" due to various known detect phenomena e.g. Swerling effects, thus convergence of maximal SNR may or may not occur. A "normalized" or "relative" SNR may be used as a criterion for convergence or stopping criterion. For example, for each selected target, the system may use Max received SNR in radar for a convergence criterion for parameter calibration. However, the SNR is not constant for a target, e.g. given 10 detections, with the same radar parameters, a slightly different SNR may result. Thus, it is desired to differentiate between SNR changes of the next detection (over the same target) which are due to improved radar parameters vs changes which are merely due to target sparkling. However, in a radar system there is normally more than one beam (e.g. at least 4 beams in basic radar, up to 100 beams in digital radar). One beam in the radar may be used as a reference, and that beam's parameters may not be changed iteratively. Since the sparkling effect from a target is received in all beams with the same effect, a "normalized SNR" may then be defined, as the SNR changes between the main beam to the reference beam. This eliminates or reduces the sparkling effect of the target over the SNR, and, as a result, any change in normalized SNR may safely be considered a result of changes in radar parameters due to iteration.

Any suitable method may be used to select only a subset of "good" aircraft which are "better than" the aircraft detected by the radar to be calibrated which are not included in the subset. For example, the aircraft selection block aka Target Selection Module (TSM) of Figs. 1a or 1b or 1c or 1d may comprise software functionality configured to rank received aircrafts from ADSB information according to information received via the ADSB signal. The ranking process may employ a rule-based approach and/or a learnable approach, for example.

The rule-based approach selects flights according to specific criteria such as distance of aircraft from radar and/or velocity and/or type of aircraft and/or quality of its GPS, and/or number of flight points, and/or time differences between those points. This method then uses predefined rules to determine a best track from those available in the database, e.g. from those within range of the radar to be calibrated. In contrast, the learnable approach adapts over time to identify what constitutes a good track for optimization, and/or ensures that the chosen target is visible from the radar's perspective. If no valid tracks are found, the method may be configured to wait until a "good" aircraft does come by.

Both methods may also consider the calibration state of the Radar itself. For example, when the system is in its initial calibration state, meaning that the radar's calibration parameters are in the early convergence state, larger aircrafts may merit a higher score than aircraft which are smaller, and closer aircraft may merit a higher score than aircraft further away from the radar being calibrated, and/or, the system may be more tolerant regarding aircraft selection (may use also aircraft with relatively low rank).

Later, when calibration status is in a more advanced state, smaller and distanced aircraft may be given a higher score than they were in the previous stage, and may even be given a higher score than aircraft which are larger and/or are closer to the radar to be calibrated. Furthermore, at this state the system may be more selective related to which aircraft to use, if at all, e.g. as opposed to simply waiting for future aircraft.

The process for the rule-based approach may include all or any subset of the following operations suitably ordered e.g. as follows:

1. Get data from the ADSB receiver.
2. Verify Visibility: Ensure that the target is visible from the radar's perspective.
3. Evaluate Target Distance: According to aircraft location and radar location, compute the distance between the radar and the aircraft.
4. Assess Number of Points: Count the number of points or samples available for each flight. Tracks with a higher number of points are favored.
5. Check Distance Between Consecutive Points: Analyze the distance between consecutive points in the track. Prefer tracks with smaller distances between points, as this indicates more frequent and reliable updates.
6. Rank or score each aircraft's "quality" according to all or any subset of the following parameters:

    a. Distance of aircraft.
    b. Velocity and direction (Prefer "low" axial velocity).
    c. Accuracy of information (NIC and NUC fields) (Prefer "high" category).
    d. Aircraft type/size (prefer smaller, as long as there is enough SNR).
    e. Number of Points.

f. ADS-B ES version (V2 is preferred).

Any suitable logical or computational function may be used to combine all or any subset of the above parameters; this function may be learned using any suitable training data.

7. Select the best target by prioritizing the criteria in order of importance.

Radar's calibration stage typically impacts the relative ranking and importance of each parameter, e.g. as previously described.

The learnable ranker typically aims to understand what defines a good target for optimization by learning from past data, and may use historical data from previous optimization processes and/or radar calibrations. The approach typically includes training a machine learning model, such as Linear Regression or tree-based methods, to identify which features lead to faster and more accurate optimization results. Features considered may include the parameters described above in the context of the ruled-based approach.

The process for learnable ranker approach may include all or any subset of the following operations suitably ordered, e.g. as follows:

1. Collect Historical Data: Gather data from past optimization processes and radar calibrations. For example, store the data into a database each time a radar is calibrated.

2. Extract relevant features from set of data.

3. Train Machine Learning Model: Use machine learning models, such as Linear Regression or tree-based methods, to identify features that contribute to faster radar calibration.

4. Evaluate and Refine: Assess the model's performance and refine model to improve the model's ability to identify good targets for optimization.

5. In real-time, use the model in inference mode to process current target data and select the best target.

**Optimization**

SNR Detection in Radar is "sparking" due to various known detect phenomena e.g. Swerling effects. Thus "Relative SNR" (RSNR) may be used as a criterion e.g. as described elsewhere herein. Since the sparkling effect from a target is received in all beams with the same effect, RSNR may be defined as the SNR changes between main beam to the reference beam. This eliminates the sparkling effect of the target over the SNR. Any change in RSNR is then due to changes in radar parameters due to phase/amplitude changes.

AI optimization is typically used to fine-tune radar performance. The optimization process typically begins with an initial phase matrix, which may comprise an MxN matrix of zero phases and zero amplitude (typical parameters for Day0), and is used as the starting point.

Next, optimization parameters are defined, e.g. a number of steps (S) for the optimizer to run and/or a threshold for the minimum allowable difference in RSNR between iterations. The ideal SNR goal may be set based on maximal detected RSNR and difference from previous iterations.

During each step or iteration of the optimization loop, gradients may be initialized. The antenna parameters may be updated, and optimizer phases may be adjusted to minimize loss. The goal is to maximize RSNR by minimizing its negative.

The optimizer typically computes gradients with respect to the predicted phases and may update them e.g. according to the gradients and/or learning rate. The process continues until the difference between the most recent losses falls below threshold.

For radar with many independent receive beams (e.g. digital radar), the cost function may also include minimal energy in location of nulls, and in sidelobe level (SLL). Ideal location of nulls and required SLL are known values based on radar and antenna theory. This may yield even more accurate calibration and/or may allow also converging into optimal tapers (amplitude of calibration parameters).

**AI Optimization Process - example implementation:**

For simplicity, an example implementation of AI optimization is described herein for phases-only computations and using basic Max(SNR) criterion. However, amplitudes of elements may also be computed, e.g. by adding additional convergence criterions to the algorithm, e.g. as described above. The process may include all or any subset of the following operations, suitably ordered e.g. as follows:

1. **Initialize the Optimizer**

◦ Use a suitable machine learning optimizer. Set the learning rate, for example, to 0.1. The ADAM optimizer is implemented in python PyTorch library, for example.

◦ Simulation mode (optional): Set up the radar simulation environment using a radar simulator to simulate the signal-to-noise ratio (SNR) from a selected flight.

◦ Real-time mode (optional): Configure the radar environment using the radar API to simulate the SNR from a selected flight.

◦ Initialize an MxN matrix of zero phases as a starting configuration for the antenna array. Create a zero vector of size MxN if the antenna size is MxN. The optimization process may compute gradients with respect to these phases.

◦ Configure the Optimization Parameters

▪ Set a threshold for the maximum difference between the average, or other central tendency, of last N computed SNRs. The optimization process may stop if this threshold is reached.

**2.:Run the Optimization Loop**

◦ For each iteration of optimization, perform all or any subset of the following operations, suitably ordered e.g. as follows:

▪ **Initialize Gradients:** Reset the gradients at the beginning of each step or iteration.

▪ **Refine selected target position:** After the ranker selects the target, the optimizer may use the target's time to interpolate its position to the current time and compute the azimuth and/or elevation, related or relative to the Radar.

▪ **Set Antenna Parameters:** The antenna has real phases (which are unknown), and the optimizer adjusts the phases to counteract these real phases, aiming to achieve a zero-phase configuration. This typically involves setting the predicted phases each time to find the optimal zero phase.

▪ **Initiate a beam in Radar:** According to selected aircraft, send a command to transmit a beam to this position.

▪ **Correlate between ADSB & Radar targets:** Using range & velocity of target received in radar and selected target from ADSB.

▪ **Compute Relative SNR (RSNR) from Radar:** Using SNR in main beam and reference beam of Radar, compute RSNR of target.

▪ **Compute Loss:** typically based on the current phase configuration. The loss may be defined as the negative of the RSNR. The goal is to maximize the RSNR, hence minimizing its negative.

▪ **Phase values adaptation:** the optimizer computes the gradients of the function with respect to the predicted phases. The optimizer may then adjust the predicted phases in the direction of the gradients, typically making plural small adjustments based on the optimizer's learning rate.

▪ **Check Termination Conditions:** Stop the optimization process when the difference between the two most recent losses (or average or other central tendency of N recent losses) is less than the predefined threshold.

**3:End Procedure**

The process typically stops with the best antenna phase configuration that achieves the maximal RSNR, typically within the limits of the defined steps and threshold criteria.

It is appreciated that the above is but one example of suitable AI functionality to enable phase and amplitude of each element in phased array radar to be computed rather than using Near Field Test Range (NFTR), as is conventional.

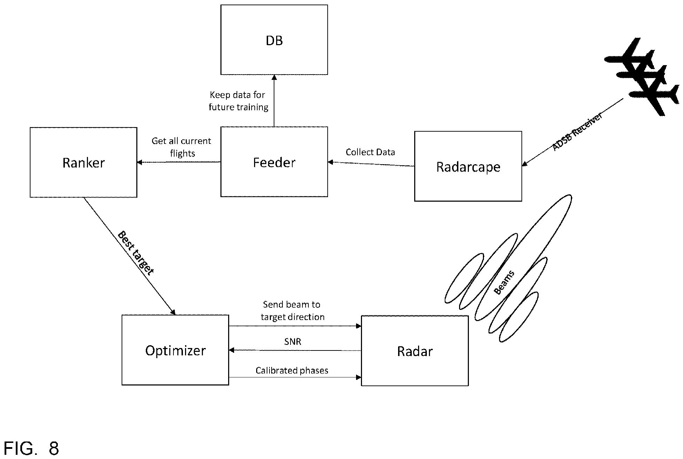

Fig. 8 is a simplified block diagram illustration of the above functionality according to certain embodiments, which may, for example, be included in the AI block of Fig. 1a (or Figs. 1b - 1d). RadarCape is of course but one example of an ADS-B Receiver. Typically, all learning and training phases occur in real-time during runtime, other than the learnable ranker which is typically trained separately beforehand. Once trained, the ranker is then used in runtime to predict the best track or aircraft.

Typically, calibration of parameters (phase and/or amplitude) is in real-time or near-real time, and the parameters are typically improved iteratively. However, frequency of iteration or intervals between iterations need not be constant and may depend on availability of aircraft within the radar's range. It is appreciated that good calibration may be achieved using even a single plane (e.g. when the radar is tracking the plane for a long time till it fades in the sky, in which case many iterations are performed on this single flight, yielding a fast calibration time). The system typically stores the most recently computed parameters and continues iterations, with these parameters e.g., when the next "good" plane becomes available.

Fig. 1b is a variation on the embodiment of Fig. 1a in which a Range-Doppler map passes from the radar and AI module. Also, Fig. 1b is an operational system whereas Fig. 1a is more suited to a system in development.

Fig. 1c is a variation on the embodiment of Fig. 1b which includes bias calibration e.g. as described herein. Biases (azimuth and/or elevation and/or range) are typically measured after the radar is fully calibrated in terms of phase/amplitude, such that the phase and amplitudes of the radar are the final value, and the iterative algorithm described herein has been disabled. Typically, in this embodiment, the Airplane Selection Module is more selective than in Fig. 1a and selects only aircrafts that yield very good accuracy. For example, this may include all or any subset of:

1. Distanced and small aircrafts (providing there is a good SNR-e.g. above 20dB).
2. Low axial velocity.
3. High NIC and NUC grade.
4. Update rate of at least 0.5 sec.

According to certain embodiment, computation of biases typically utilizes statistics of difference between location of a passing aircraft by ADSB vs. location of the same aircraft according to radar. Bias computation typically includes performing statistics over many measurements. The criterions for bias computation may include:

1. Enough measurements (a single aircraft can give many measurements, depending on its visibility time by the radar); and/or
2. Large spatial directions.

Fig. 1d is another variation on the embodiment of Fig. 1b. in Fig. 1d, phase & amplitude calibration functionality and bias measurement functionality are both provided. In Fig. 1b, only the former (phase & amplitude calibration) functionality is provided whereas in Fig. 1c, only the latter (bias measurement ) functionality is provided. It is appreciated that in Figs. 1a - 1d, the target/s may for example comprise commercial airplane/s flying commercial route/s which pass thru radar's range. Regarding Fig. 1c and 1d, the Airplane Selection block may be implemented in AI also for biases e.g. to select best airplanes to use for biases measurement. It is appreciated that, e.g. regarding Fig. 1c, the radar typically provides a report with parameters of the detected target/s but there is typically no need for a range-doppler map for bias measurement. For all of Figs. 1a - 1d, the system typically uses (or, e.g. in Fig. 1a, simulates) direct ADS-B signal reception from commercial airplanes which are within range. This ensures that when a commercial airplane transmits a signal, the adsb receiver/s receive that signal immediately i.e. at the speed of light in contrast, say, to flight24 which is a localization service whose server collects adsb signals from adsb receivers around the globes. Thus, aircraft aka a/c localization signals provided by the flight24 service would take a few seconds to arrive; by this time the airplane would have moved on, which may unacceptably reduce localization accuracy.

A particular advantage of embodiments herein is that dedicated calibration aircraft fly specially designed routes, whereas embodiments herein rely simply on commercial aircraft whose routes are determined by external, typically commercial, and/or weather-based considerations. For biases measurement the system is typically configured for collecting data from plural flights, typically continuously over the lifespan of the radar. Then, statistics overcome the lack of a controlled calibration plane. Nor must the process necessarily demand any special resources from the radar, other than computational resources, which, experience shows, are normally available. This is because detection information relied upon is simply the information that operating radar collects anyway, as the radar in its normal course of activity detects all targets in the sky. For parameter calibration the system is typically configured for improving parameters iteratively e.g. till any suitable convergence criterion or stopping criterion is achieved. This is advantageous since conventional calibration flights are used for biases correction of pre-calibrated radar (in NFTR etc.), but do not provide a solution for parameter calibration.

It is appreciated that dedicated calibration aircraft have high-precision sensors relative to commercial aircraft which have less precision/accuracy. However, flights/aircraft may be selected that will provide good accuracy, by analyzing ADSB information: all or any subset of distance, direction, velocity, size, and accuracy. Also, the system herein may achieve results more slowly than controlled calibration flight, however this is not a problem since controlled calibration flights are performed so infrequently (e.g. once every several months or annually) that the slow results of the system herein still out-perform the infrequent calibration flights of today. Also, since computation is typically performed continuously, a considerable advantage is gained: changes due to aging are corrected continuously, as opposed to degradation which occurs when controlled calibration flights, performed rarely (such flights are a costly and logistically complex operation), are relied upon.

It turns out that the accuracy of ADSB aka ADS-B does suffice, thus using embodiments herein does result in acceptable accuracy. For example, typically, commercial aircraft uses GNSS to acquires its location. Each aircraft periodically (e.g. twice per second) broadcasts information on itself such as identification and/or current position and/or velocity and/or time (in 1090 ES e.g.). ADS-B is widely in use by commercial aircraft; ADS-B transmission ("ADSB-Out") can be received even by low-cost off-the-shelf ADS-B receivers (using 1090Mhz & 978Mhz e.g.). ADS-B encodes the position and the velocity accuracies of the information. Position accuracy can reach up to <7.5m (for high scores in NIC and NUCp fields). Velocity is accurate up to <0.46 m/sec (for high score in NUCv field).

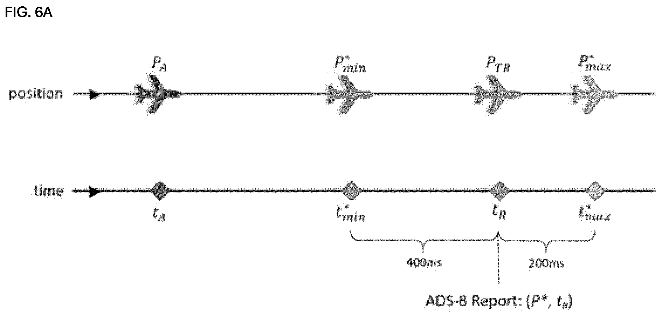

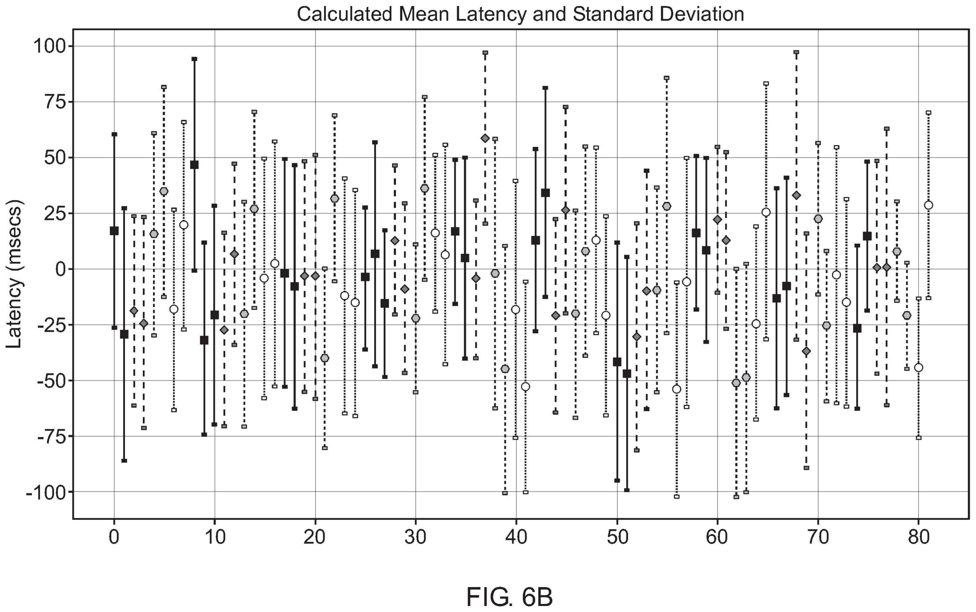

Latency is the difference between the original airplane position measured by the onboard GPS and the actual airplane position as reported at ground station. The onboard ADS-B broadcasting system compensates for the transmission latency by adjusting the position information in the broadcast message. The latency that remains is called "uncompensated latency" (UL). According to DO-260 MOPS, this latency will be within -200msec to +400msec. In fact, measured mean latencies have been found to be less than $\pm$50msec; see e.g. "A study of uncompensated latency in ADS-B reports. Michelle George et al., Aug 2020". Latency errors (time vs. position) are shown in the diagram of Fig. 6a; a graph of latency vs. mean latency and standard deviation is shown in Fig. 6b. Example analysis: Position_Error = GPS_error + Uncompensated_Latency_Error
@ NIC=10, GPS_Error < 25m.

$$UL\_Error < 50[msec]*(1000[km/h]/3600) \approx 14[m]$$

thus position error or PE < 25+14 = 39[m].

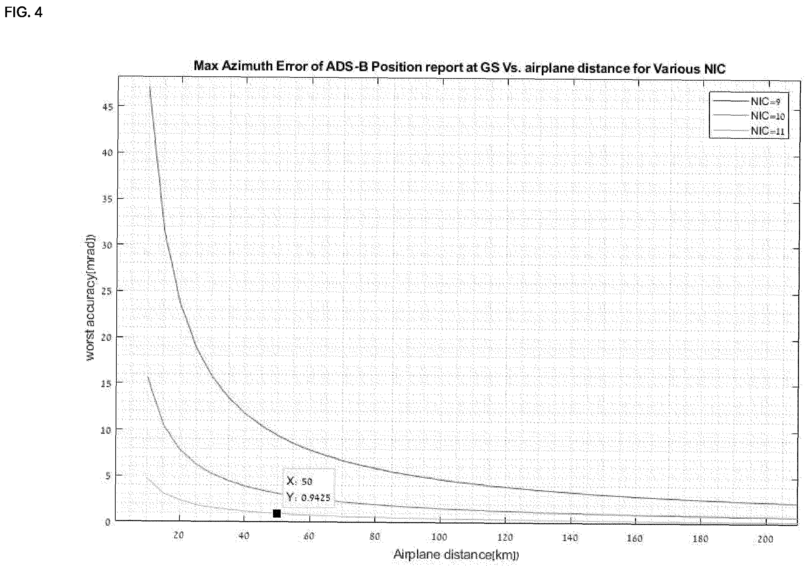

Fig. 4 is a graph illustration which shows maximal azimuth error for ADS-B position report at a ground station vs airplane distance for various NIC (the vertical axis shows worst accuracy). NIC is 9, 10, 11 in the top, middle and bottom graphs respectively.

It is believed that by wisely selecting "good" airplanes e.g. as described herein, better than 1mrad azimuth accuracy may be achieved. Criteria to be used for best accuracy (e.g. by the aircraft selection block of Fig. 1a (or Figs. 1b - 1d)) may include all or any subset of the following:

ADS-B ES version number (e.g. prefer V2).
Type/size of airplane (e.g. prefer smaller).
Distance (e.g. prefer airplanes more distance from the radar being calibrated).
Velocity of airplane (e.g. prefer low axial velocity over high).
Using NIC (Navigation Integration Category) and NACp (Navigation Accuracy Category position) values from ADS-B (0 to 11).
The best position error containment radius may be determined e.g. Rc<7.5m.
Prefer higher NIC/NACp values.

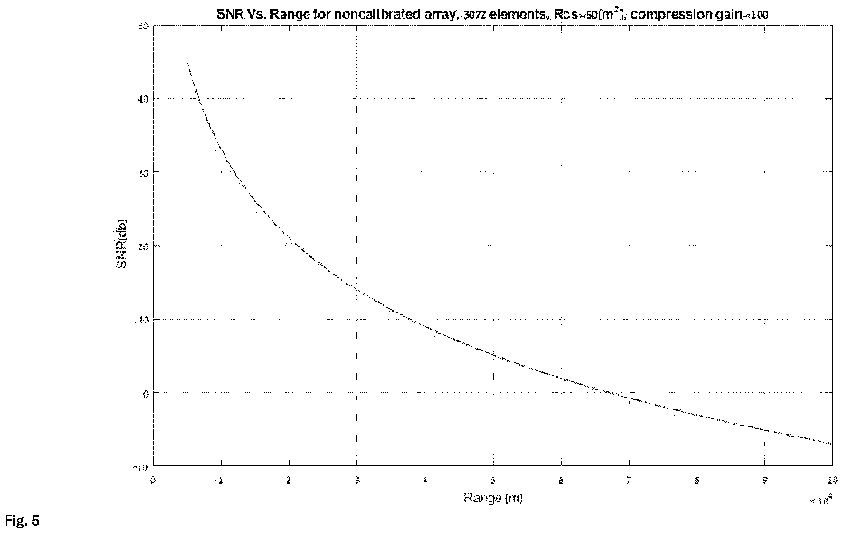

Fig. 5 shows SNR (in DB) vs. range (in m) for a noncalibrated array of 3072 (e.g.) elements. The setup used to graph Fig. 5 was: Num of element=3072, Tx Power per element: 200Watt , 10%; WVF Compression Gain= 100, RCS=50 [m^2], Tx Gain = Rx Gain= 4dB

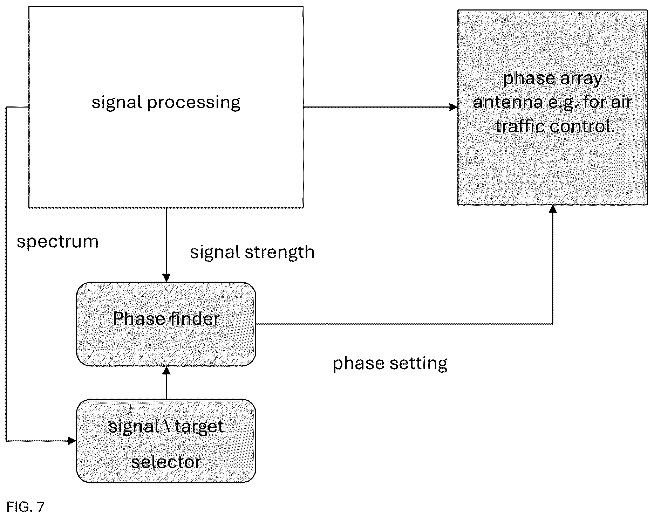

Fig. 7 is an example embodiment which may be provided standalone and/or in conjunction with any other embodiment shown or described herein. It is appreciated that conventionally, prior to delivery to the customer, Phased Array antenna must be calibrated in the Near Field Test Range (NFTR). Unfortunately, NFTR facilities are both costly and time-consuming. Also, this initial calibration becomes inadequate over time as the antenna suffers from calibration degradation given mechanic and/or electronic changes in the antenna in the field over time. The embodiment of Fig. 7 leverages an antenna's natural surroundings to yield a typically self-automotive calibration process. Typically, the system is configured to detect a signal of a desired target (e.g., current interference or nearby signal or for radar, target returns) and to change the phases in the phase array antenna to yield stronger gain e.g. the strongest possible gain; this may then enable the system to identify and/or quantify phase errors in the antenna and fix them.

The system of Fig. 7 typically comprises all or any subset of: an antenna typically having an API for phase changing, a signal processing unit, and a hardware processor configured to compute a sequence, e.g. as described above.

The phase finder may be configured for finding the signal/target that will best optimize phase optimization e.g. by training a neural network to return a suggestion/ranking for every signal/target. Thus, for radar e.g., this embodiment may find the target from ADSB data and use its kinematics as input to and/or as training data for the neural network.

Typically, a first algorithm or software functionality works on multi beam antenna and gets the signal \target strength for each beam, and a second algorithm or software functionality works on digital antenna, and typically receives all of the element signals.

Given multi beam antenna with n available beams and m phase elements, all or any subset of the following operations, suitably ordered e.g. as follows, may be performed for each of the m phase elements:

in (say) the phase_area = 0-360 degree make n-1 phase settings to the m'th element use the n'th beam with the original setting for normalization
find the two (say) biggest signal strength beams and their re-define phase_area e.g. according to their phase setting
repeat e.g. until the phase_area is smaller than a threshold TH
move to the next element

If all signal processing is defined as a neural network, the network may be used to find the correct phase setting e.g. using back propagation.

It is appreciated that details herein are not intended to be limiting. More generally, certain embodiments provide a system, computer program product and method for radar calibration (including for air traffic control radar) based on ADSB reception of commercial aircraft typically flying their normal commercial routes and passing within the range of the radar to be calibrated and e.g. by knowing the passing a/c's locations, computing calibration coefficients (e.g. phase and/or amplitude) for the radar, typically iteratively by use of an AI algorithm which may be trained using "best" commercial aircraft selected from among the passing commercial aircraft. Typically, calibration does not require the radar to enter a near field range and maintains optimal calibration e.g. of phase and/or amplitude) for the entire life of the radar - even under changes in hardware over time. Phase-array based radar systems may perform calibrations for the system in the field without the need for delays and costs that are necessary when entering a near field range and optimal calibrations may be maintained throughout the life of the system, more continuously than conventional systems which achieve calibration only by virtue of relatively infrequent (due to their being both costly and complex) special calibration flights and experience degradation in between these infrequent flights.

Certain embodiments also provide a method which includes autonomous calibration of radar e.g. ATC and/or phased array radars, in the field, by making use of ADS-B signals available from typically commercial aircraft which happen to come within the range of the ATC (say) radar to be calibrated, typically without any need to determine, coordinate, or to even know in advance, which aircraft will be flying by, and what their routes are - all in contrast to conventional calibration flights which are carefully scheduled, including their routes, in advance.

Alternatively, or in addition, biases are computed e.g. based on ADSB reception of the passing aircraft, thereby to reduce or eliminate the need for logistically complicated infrequent calibration flights conventionally used to update bias coefficients to ensure adequate bias correction in the antenna - where such special calibration flights burden the customer, today, with considerable operating cost and logistics (inter alia, the system is operationally disabled for the duration of the calibration flights). These burdensome special flights usually occur every six months to a year, depending on the accuracy required in the system) due to changes over time in the radar calibration.

The system is typically useful for avoiding any need to enter near field range for phased-array antenna calibrations and/or for maintaining calibrations optimally, even given mechanical changes and gradual hardware obsolescence. Another advantage may be improving time to market for new radar (and/or decreasing development costs) thanks to the ability to skip ranging. The method provides efficient "recovery" from almost inevitable changes in the system hardware (mechanical blows, problems in the calibration network, hardware obsolescence). The method typically improves the performance of the system over time by preventing degradation in the quality of calibrations and biases.

Many variations are possible. For example, bias correction, e.g. as described herein, may be used to resolve bias errors in either phased-array or non-phased array radar, including ATC. Also, it appreciated that embodiments herein are useful for radars other than air traffic control radar, such as but not limited to phase-array calibration in communications, weather forecasting radars, marine radar systems which help ships and boats navigate safely through poor visibility conditions like fog or rain, advanced driver-assistance systems (ADAS) for vehicular travel, radar guns used by police to measure the speed of vehicles to enforce speed limits and improve road safety, radar used in rescue operations to locate missing persons or vehicles, especially in poor visibility conditions, monitoring land use, detecting changes in vegetation, and assessing natural disasters.

It is appreciated that methods herein significantly improve many such use cases. Phased array radars are conventionally calibrated before delivery to the customer. Calibration typically comprises measuring the phase and amplitude of each radar's element and equalizing these measures between all elements; this ensures the radar is coherent, and generation of a perfect radar beam. Calibration is normally performed in a sterile environment, such as Near Field Test Range (NFTR); facilities for this are costly, ranging from millions to tens of millions of dollars, depending on size and complexity. The facility is also large in size, demanding large real estate. Due to these problems, manufacturers tend to maintain only a few NFTR facilities which creates a supply-chain bottleneck, since each and every radar must pass through NFTR. Moreover, accuracy of a phased array antenna tends to degrade over time due to hardware aging and mechanical impacts, sometimes to a point which necessitates returning the radar to an NFTR facility for recalibration. In contrast, use of embodiments herein enables radar to be directly supplied to the customer, bypassing the NFTR calibration process, reducing both time to market and expenses. Also, the radar's calibration is continuously maintained over the lifespan of the product without costly and inconvenient recalls to an NFTR facility for recalibration.

It is appreciated also, that even after perfectly calibrating a phased array radar, errors in beam direction (Beam Pointing Error) are typically still present, e.g. due to mechanical imperfection of the antenna (e.g.: plane deformation, errors in antenna levelling, etc.). Moreover, these errors tend to change over time due to mechanical changes. Conventionally, overcoming these errors requires a radar's operator to periodically perform bias calibration by arranging a special calibration airplane flight; calibration aircraft typically are equipped with accurate location equipment (DGPS) which increases the cost considerably. Also, the radar is out of operation while this process is ongoing. In contrast, according to embodiments herein, biases are measured during normal operation of the radar, with no operational and logistical costs, and, moreover, biases are better maintained, since they are continuously, rather than merely occasionally, adapted to mechanical changes.

It is appreciated that terminology such as "mandatory", "required", "need" and "must" refer to implementation choices made within the context of a particular implementation or application described herewithin for clarity, and are not intended to be limiting, since, in an alternative implementation, the same elements might be defined as not mandatory and not required, or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations, as appropriate. Included in the scope of the present disclosure, inter alia, are machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices, each including at least one processor and/or cooperating input device and/or output device and operative to perform, e.g. in software, any operations shown and described herein; information storage devices or physical records, such as disks or hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented, e.g. by one or more processors. The invention shown and described herein may include (a) using a computerized method to identify a solution to any of the problems or for any of the objectives described herein, the solution optionally including at least one of a decision, an action, a product, a service, or any other information described herein, that impacts, in a positive manner, a problem or objectives described herein; and (b) outputting the solution.

The system may, if desired, be implemented as a web-based system employing software, computers, routers, and telecommunications equipment, as appropriate.

Any suitable deployment may be employed to provide functionalities, e.g. software functionalities, shown and described herein. For example, a server may store certain applications, for download to clients, which are executed at the client side, the server side serving only as a storehouse. Any or all functionalities, e.g. software functionalities shown and described herein, may be deployed in a cloud environment. Clients, e.g. mobile communication devices such as smartphones, may be operatively associated with, but external to the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false, and to perform y each time x is determined to be true, thereby to yield a processor which performs y at least once, typically on an "if and only if" basis, e.g. triggered only by determinations that x is true, and never by determinations that x is false.

Any determination of a state or condition described herein, and/or other data generated herein, may be harnessed for any suitable technical effect. For example, the determination may be transmitted or fed to any suitable hardware, firmware or software module, which is known or which is described herein, to have capabilities to perform a technical operation responsive to the state or condition. The technical operation may, for example, comprise changing the state or condition, or may more generally cause any outcome which is technically advantageous, given the state or condition or data, and/or may prevent at least one outcome which is disadvantageous, given the state or condition or data. Alternatively, or in addition, an alert may be provided to an appropriate human operator, or to an appropriate external system.

Applicability of the subject matter disclosed herein is not limited to embodiments claimed, nor to solutions for specific disadvantages emphasized herein, nor need any element of any system and method described herein, on its own or in combination with other elements described herein, operate only in environments or use-cases or technology areas such as those described herein.

Features of the present invention, including operations, which are described in the context of separate embodiments, may also be provided in combination in a single embodiment. For example, a system embodiment is intended to include a corresponding process embodiment, and vice versa. Also, each system embodiment is intended to include a server-centered "view" or client centered "view", or "view" from any other node of the system, of the entire functionality of the system, computer-readable medium, apparatus, including only those functionalities performed at that server or client or node. Features may also be combined with features known in the art, and particularly, although not limited to, those described in the Background section or in publications mentioned therein.

Conversely, features of the invention, including operations, which are described for brevity in the context of a single embodiment or in a certain order, may be provided separately or in any suitable sub-combination, including with features known in the art (particularly although not limited to those described in the Background section or in publications mentioned therein) or in a different order. "e.g." is used herein in the sense of a specific example which is not intended to be limiting. Each method may comprise all or any subset of the operations illustrated or described, suitably ordered e.g. as illustrated or described herein.

Devices, apparatus, or systems shown coupled in any of the drawings may in fact be integrated into a single platform in certain embodiments, or may be coupled via any appropriate wired or wireless coupling, such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof, can also be provided as methods and operations therewithin, and functionalities described or illustrated as methods and operations therewithin can also be provided as systems and sub-units thereof. The scale used to illustrate various elements in the drawings is merely exemplary and/or appropriate for clarity of presentation, and is not intended to be limiting.

## Claims

1. A method for reducing cost of airflight, the method comprising:
   reducing cost of Air Traffic Control (ATC) by reducing maintenance cost of the Air Traffic Control (ATC)'s radar system, said reducing of said maintenance cost including:
   reducing operational cost of estimation, based on data, of bias in said Air Traffic Control (ATC) radar system including at least once, basing said estimation of bias at least partly on data from at least one commercial aircraft, to reduce or eliminate need for flying dedicated calibration aircraft to provide a source of data for said estimation of bias.

2. The method of claim 1 and also comprising, at least once, comparing an estimation E of bias of said at least one Air Traffic Control (ATC) radar system to a standard, wherein said estimation E is based at least partly on said data from at least one commercial aircraft.

3. The method of claim 1 and also comprising, at least once, recalibrating said at least one Air Traffic Control (ATC) radar system based at least partly on said data from at least one commercial aircraft.

4. The method of claim 1 wherein said commercial aircraft is flying a route which is determined externally, or a route which is determined without regard to calibration requirements of the Air Traffic Control (ATC)'s radar system, or a commercial route, rather than flying a route customized to facilitate calibration of the Air Traffic Control (ATC)'s radar system, as is conventional when flying dedicated calibration aircraft.

5. The method of claim 1 wherein said at least one commercial aircraft comprises plural commercial aircraft passing within the Air Traffic Control (ATC)'s radar system's range.

6. The method of claim 1 wherein said at least one commercial aircraft comprises a subset of, rather than a set of all, commercial aircraft passing within the Air Traffic Control (ATC)'s radar system's range during a bias estimation data gathering session, and wherein said method comprises generating said subset by selecting only some "best" aircraft from among said set of all commercial aircraft (e.g. selecting some aircraft which are better than others) passing within the Air Traffic Control (ATC)'s radar system's range during said bias estimation data gathering session.

7. The method of claim 3 wherein said recalibrating is performed repeatedly e.g. periodically, thereby to ensure quality of said Air Traffic Control (ATC) by repeatedly, e.g. periodically, estimating bias based at least partly on said data from said at least one commercial aircraft, and, each time said bias is unacceptably high, recalibrating said at least one Air Traffic Control (ATC) radar system.

8. The method of claim 3 wherein said estimation E is, at least for a certain time period (e.g. after an initial learning period) based entirely on said data from at least one commercial aircraft, and wherein the Air Traffic Control (ATC) is recalibrated based on said estimation E, and thus, based entirely on said data from at least one commercial aircraft, thereby to eliminate the need for flying dedicated calibration aircraft during said time period.

9. The method of claim 1 wherein said data, on which said estimation of bias is based, comprises location and/or direction, and/or velocity of said at least one commercial aircraft.

10. The method of claim 1 wherein:

during a training data-gathering phase, dedicated calibration aircraft is flown to provide a source of first data for said estimation of bias, and, also, second data is gathered from said at least one commercial aircraft, and wherein, accordingly, an Artificial Intelligence-based hardware processor learns how to predict bias in said Air Traffic Control (ATC) radar system based on said data gathered from said at least one commercial aircraft, using training data which pairs said first data and said second data; and/or
said first data and said second data both comprise location and/or direction, and/or velocity data of the dedicated calibration aircraft and the at least one commercial aircraft respectively; and/or
said training data comprises location and/or direction, and/or velocity data of the dedicated calibration aircraft at time t, paired with location and/or direction, and/or velocity data of the at least one commercial aircraft at said time t.

11. An antenna calibration system e.g. for Air Traffic Control radar antennae, the system comprising:

a search functionality for finding a correct phase and/or amplitude and/or AI-based functionality for calibrating phase and/or amplitude; and
a hardware processor which receives data via a (commercial) ADS-B system serving (typically commercial or civilian) aircraft passing through the radar's range which are equipped with an ADS-B transponder (typically, GPS is used to enable the commercial aircraft to determine and broadcast its self-position) wherein the hardware processor is typically configured to select at least one best target, from among said aircraft, for training the system's functionalities.

12. The system of claim 11 and also comprising flight tracking functionality which accepts information from ADS-B receivers and, accordingly, tracks a/c which are moving from one ADS-B receiver's area of coverage, to another ADS-B receiver's area of coverage.

13. The system of claim 12 and also comprising ADS-B receivers which collect data from aircraft outside of the flight-tracking functionality's ADS-B network coverage area.

14. The system of claim 11 wherein:

the antenna comprises a phased array antenna; ; and/or
the antenna comprises a MIMO (multiple input, multiple output) antenna; and/or

the system also comprises ADS-B receivers, which use antennae to collect data from any aircraft in their local area (aka area of coverage) which is equipped with an ADS-B transponder.

15. A computer program product, comprising a non-transitory tangible computer readable medium having computer readable program code embodied therein, said computer readable program code adapted to be executed to implement a method for reducing cost of airflight, the method comprising:

reducing cost of Air Traffic Control (ATC) by reducing maintenance cost of the Air Traffic Control (ATC)'s radar system, said reducing of said maintenance cost including:

reducing operational cost of estimation, based on data, of bias in said Air Traffic Control (ATC) radar system including at least once, basing said estimation of bias at least partly on data from at least one commercial aircraft, to reduce or eliminate need for flying dedicated calibration aircraft to provide a source of data for said estimation of bias.

Fig. 1a

EP 4 707 861 A1

# Fig. 1B

Antenna

Airplane Selection ← Sky Map ← ADSB Receiver

Data of Selected Airplanes

Phased-Array Management → Phases & Amplitudes → Phased Array Radar → Tx → Target

Rx

AI Algorithm ← Target Report And/or Range-doppler map

EP 4 707 861 A1

# Fig. 1c

# Fig. 1d

Antenna

Airplane Selection ← Sky Map ← ADSB Receiver ← Antenna

Data of Selected Airplanes

Phased-Array Management → Phases & Amplitudes or biases → Phased Array Radar

Tx → Target/s(typically commercial airplane/s flying commercial route/s which pass thru radar's range)

Rx ←

AI Algorithm and/or bias measurement ← Target Report And/or Range-doppler map ← Phased Array Radar

"Day0" Data

EP 4 707 861 A1

Az Cut Tx Pattern: Ideal Vs. Day0

Fig. 2

EP 4 707 861 A1

Fig. 3

FIG. 4

Max Azimuth Error of ADS-B Position report at GS Vs. airplane distance for Various NIC

EP 4 707 861 A1

Fig. 5

FIG. 6A

Calculated Mean Latency and Standard Deviation

FIG. 6B

FIG. 7

EP 4 707 861 A1

FIG. 8

Europäisches
Patentamt

European
Patent Office

Office européen
des brevets

# EUROPEAN SEARCH REPORT

**Application Number**

EP 25 20 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/167591 A1 (ABBETT MICHAEL R [US] ET AL) 2 July 2009 (2009-07-02) | 1-10,15 | INV. G01S13/86 |
| A | * abstract; figures 1-4 * <br> * paragraphs [0009] - [0023], [0037] - [0038], [0050] - [0058], [0121], [0139] - [0140] * | 11-14 | G01S13/91 <br> G01S7/40 <br><br> ADD. <br> G01S13/02 |
| X | EP 3 273 262 A1 (HENSOLDT SENSORS GMBH [DE]) 24 January 2018 (2018-01-24) | 1-10,15 | |
| A | * figures 8, 9, 13, 14 * <br> * paragraphs [0022] - [0023], [0029], [0031], [0035], [0037] * <br> * paragraphs [0041] - [0042], [0046], [0048] * | 11-14 | |
| X | KUMAR GOGULAMUDI SAMPATH ET AL: "Effective Automatic Radar Bias Estimation Scheme Using Targets of Opportunity", IEEE ACCESS, IEEE, USA, vol. 9, 21 October 2021 (2021-10-21), pages 144227-144240, XP011885849, DOI: 10.1109/ACCESS.2021.3121795 [retrieved on 2021-10-28] | 1-10,15 | |
| A | * abstract; figures 1, 2, 4; table 1 * <br> * page 144228, left-hand column, line 36 - right-hand column, line 42 * <br> * page 144229, right-hand column, lines 15-19 * <br> * page 144230, left-hand column, line 18 - right-hand column, line 9 * <br> * page 144233, right-hand column, line 1 - page 144234, left-hand column, line 25 * <br> * page 144235, right-hand column, lines 3-5 * | 11-14 | **TECHNICAL FIELDS SEARCHED (IPC)** <br><br> G01S |

-/--

The present search report has been drawn up for all claims

| Place of search | Date of completion of the search | Examiner |
|---|---|---|
| Munich | 12 January 2026 | Rodríguez González |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

EUROPEAN SEARCH REPORT

Application Number

EP 25 20 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG JAMIE HUIMIN ET AL: "Array-based target localisation in ATSC DTV passive radar", IET RADAR SONAR NAVIGATION, THE INSTITUTION OF ENGINEERING AND TECHNOLOGY, UK, vol. 13, no. 8, 1 August 2019 (2019-08-01), pages 1295-1305, XP006086211, ISSN: 1751-8784, DOI: 10.1049/IET-RSN.2018.5511 | 11-14 | |
| A | * abstract; figures 1, 2, 5, 6, 8 * * page 1298, right-hand column, line 9 - page 1299, right-hand column, line 20 * ----- | 1-10,15 | |
| | | | TECHNICAL FIELDS SEARCHED (IPC) |

The present search report has been drawn up for all claims

| Place of search | Date of completion of the search | Examiner |
|---|---|---|
| Munich | 12 January 2026 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                        

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0546

This annex lists the patent family members relating to the patent documents cited in  the above-mentioned European search report.
The members are as contained in the European Patent Office EDP file on
The European Patent Office is in no way liable for these particulars which are merely given for the purpose of information.

12-01-2026

| Patent document cited in search report | Publication date | Patent family member(s) | | Publication date |
|---|---|---|---|---|
| US 2009167591 A1 | 02-07-2009 | AU | 2008338805 A1 | 25-06-2009 |
| | | NZ | 585979 A | 27-04-2012 |
| | | US | 2009167591 A1 | 02-07-2009 |
| | | WO | 2009079187 A2 | 25-06-2009 |
| EP 3273262 A1 | 24-01-2018 | DK | 3273262 T3 | 24-06-2019 |
| | | EP | 3273262 A1 | 24-01-2018 |
| | | PL | 3273262 T3 | 31-10-2019 |
| | | PT | 3273262 T | 17-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **U. CARLETTI** ; **R. CARDINALI** ; **M. CICOLANI**. Air traffic control using phased array radar technology. *2008 Tyrrhenian International Workshop on Digital Communications - Enhanced Surveillance of Aircraft and Vehicles*, 2008, 1-6